# EUROPEAN PATENT SPECIFICATION

(11) **EP 2 062 783 B1**
(45) Date of publication and mention of the grant of the patent: **05.03.2014**
(21) Application number: 08170022.1
(22) Date of filing: 26.11.2008
(51) Int. Cl.: B60R 5/04, B60R 7/08, B60R 13/02

(54) **Improvements in or relating to luggage restraints**
Verbesserungen an oder im Zusammenhang mit Gepäckrückhalteeinrichtungen
Améliorations de ou associées aux dispositifs de retenue de bagages

(30) Priority: 26.11.2007 GB 0723058
(43) Date of publication of application: 27.05.2009
(73) Proprietor: Nissan Motor Manufacturing (UK) Ltd., Cranfield Bedfordshire MK43 0DB (GB)
(72) Inventor: Swanepoel, Gary, Cranfield, Bedfordshire MK43 0DB (GB)
(74) Representative: Holmes, Matthew William

(56) References cited:
- DE-A1- 10 320 210
- DE-B- 1 101 195
- JP-U- 64 022 555
- US-A- 5 415 457

## Description

The present invention relates to luggage restraints for use in a motor vehicle and, in particular, to shopping hooks provided within motor vehicles.

The luggage area or boot of a motor vehicle is often used to carry produce that is not securely contained. Typically, such produce is stowed in open topped, non-rigid bags. When these bags are placed on the floor of the luggage space or boot, the bag sags around the produce and then, as a result of the subsequent motion of the car, the produce can escape from the bag and move independently around the luggage area. This is clearly disadvantageous as the produce may be damaged and the movement of the produce during the journey can cause concern or irritation to the driver.

In order to address this issue some users have modified their vehicles to contain hooks from which the bags can be hung. For example, US5415457 discloses bag retainers that fit on vehicle seat backs. The bag retainer has a back wall insert with an integrally mounted retainer insert.

This maintains the shape of the bag and prevents the egress of its contents during the journey. However, retrofitted hooks suffer from a number of problems. Firstly, either the hook or the surface to which it is affixed may not be sufficiently resilient. As a result a hook may become detached and, in doing so, it may damage the surface to which it was previously affixed. In addition, as the hook was not designed for the specific vehicle then the appearance of the vehicle may be adversely affected. This is more of a problem for an MPV or SUV vehicle in which the luggage area can be viewed from outside the vehicle and therefore the hooks are clearly visible. Furthermore, badly positioned hooks can snag on other parts of the vehicle, for example on a second row seat when it is folded.

In order to respond to customers' concerns and in order to avoid some of the problems associated with retrofitted hooks, some vehicle manufacturers have provided a myriad of systems for preventing the unwanted movement of goods stowed in the luggage compartment of the vehicle. These systems include integral crates that sub-divide the luggage area as well as hooks from which bags can be suspended.

In order to prevent snagging of the hook against other items, such as larger items stowed in the luggage space or other parts of the vehicle, vehicle manufacturers have developed various luggage hooks that fold away when they are not needed. These small moving parts can sometimes lead to undesirable squeaks and rattles which reduces the perceived quality of the vehicle and can have a negative impact on the ride quality.

In place of moving parts, some vehicle manufacturers have provided recessed hooks. However, by recessing the hook into a trim panel, a sound pathway is opened that allows sound to enter the occupant compartment. Considerable attention is given during vehicle development to minimise sound ingress into the occupant compartment and therefore the provision of a recessed hook is not a universal solution.

Furthermore, in order to address the additional problems caused by the abovementioned known systems, there is a trend of increasing complexity and cost. In some instances, the cost has become disproportionate to the benefit afforded by the provision of the hook or hooks.

It is against this background that the invention has been made.

According to the present invention there is provided a hook for use in a vehicle, the hook comprising: a retaining member configured to hold an object, in use; a backing plate mounted behind the retaining member; wherein the retaining member is an integral part of a first piece of vehicle trim; and wherein the backing plate is an integral part of a second piece of vehicle trim. The backing plate (70) extends beyond the boundary where the two parts of trim join together, and so provides a closure behind the retaining member.

The provision of a hook formed solely from the vehicle trim pieces provides a very elegant, low cost solution. It also reduces the number of parts required in manufacture as the hook is provided with no additional parts comparative to a vehicle with no hook. Furthermore, as there are no additional parts, there is no need to affix additional parts accurately and therefore the perceived quality of this part of the vehicle is assured.

The first piece of vehicle trim may be a trunk side trim and the second piece of trim may be a rear side window trim.

The retaining member may be elongate so that it facilitates easy use of the hook whilst still providing a hook that is relatively compact in the vertical direction.

The retaining member may comprise a neck portion and a head portion. The head portion may be offset relative to the neck portion. The offset of the head portion relative to the neck portion reduces the likelihood of the inadvertent removal of the object held by the hook as a result of the motion of the vehicle.

The retaining member is formed as a cut-out from the first piece of vehicle trim. The backing plate may be configured to prevent the ingress of sound through the cut-out in the first piece of vehicle trim.

The rear side window trim may be a different colour from the trunk side trim. In particular, the rear side window trim may be a lighter colour than the trunk side trim and, as a result, the backing plate is a lighter colour than the retaining member and therefore the user's attention is drawn to the hook.

Furthermore, according to the present invention there is provided a vehicle comprising: a trunk side trim incorporating a retaining member; and a rear side window trim incorporating a backing plate that lies behind the retaining member; wherein the backing plate extends beyond the boundary where the two parts of trim join together, so as to provide a closure behind the retaining member, and wherein the retaining member and the backing plate provide a hook.

The present invention will now be described, by way of example only, with reference to the accompanying figures in which:
Figure 1 shows part of a vehicle interior including a hook according to the present invention;
Figure 2 is an enlarged view of the hook shown in Figure 1;
Figure 3 shows an exploded view of the hook shown in Figure 2; and
Figure 4 shows a section along the line A-A of the hook shown in Figure 2.

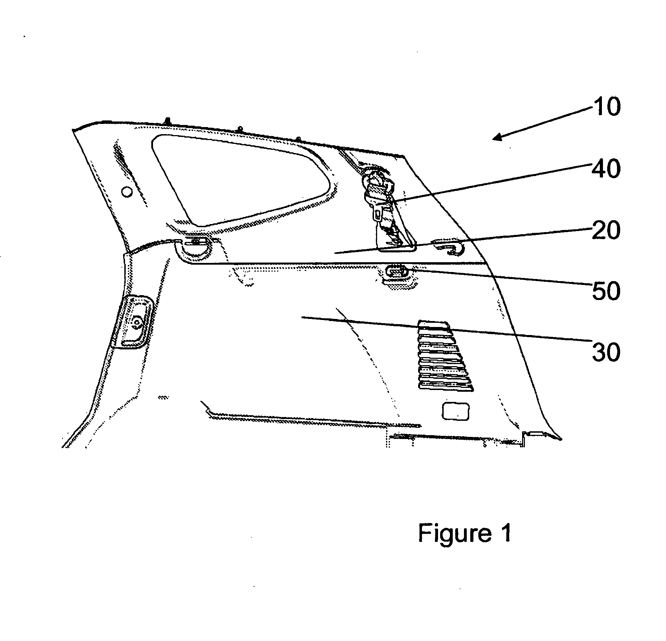

Figure 1 shows the interior of a vehicle 10 including a rear side window trim 20 and a trunk side trim 30. The trim 20, 30 is provided in the luggage area of an SUV. This part of the vehicle 10 is typically used for luggage, but it can also be used for seating and therefore there is also provided a seat belt anchorage 40 mounted on the rear side window trim 20.

A hook 50 is provided in the vicinity of the join between the rear side window trim 20 and the trunk side trim 30. This location is convenient as it allows bags to be suspended from the hook 50 so that the base of a standard bag is in light contact with the floor of the luggage compartment. This enables the contents of the bag to rest on the floor of the luggage compartment whilst the handles of the bag will be under sufficient tension to ensure that the bag remains engaged with the hook 50.

In this context, the phrase "in the vicinity" is intended to encompass the provision of the hook in the trunk side trim 30 or the rear side window trim 20. Furthermore, the hook may abut the join or it may be a small distance, for example 10mm, from the join between the trunk side trim 30 and the rear side window trim 20.

The maximum distance that the hook 50 can be positioned from the join is dictated by the shape of the trim pieces 20, 30. For example, if the join is curved in a downward direction near to the tailgate, then the rear side window trim 20 would overlap with the trunk side trim 30 in order to permit such a curved feature. Therefore, the maximum vertical distance between the join and the hook 50 would be dictated by the vertical extent of the curvature of the join near to the tailgate.

The hook 50 is mounted sufficiently close to the vehicle tailgate that the user can reach the hook 50 with ease from a position standing at the rear of the vehicle. Ease of accessibility of the hook 50 is important for efficient usage of the hook 50. The hook 50 is not placed adjacent the tailgate, in order to ensure that the contents of bags hanging from the hook do not interfere with the closure of the tailgate.

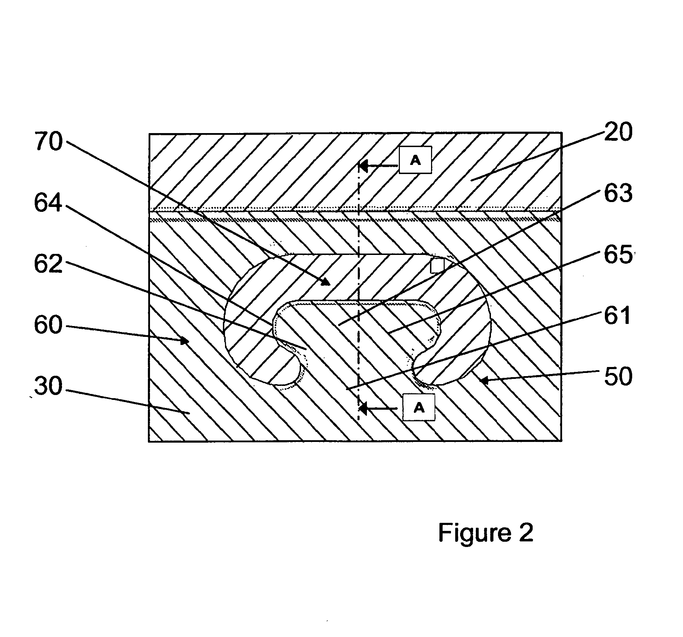

Figure 2 shows the parts of the rear side window trim 20 and the trunk side trim 30 adjacent to the hook 50. The hook 50 includes a retaining member 60 and a backing plate 70. The trunk side trim 30 is shaped to provide the retaining member 60 and the rear side window trim 20 is shaped to provide the backing plate 70. As a result of this configuration, there are not additional parts as each of the constituent parts of the hook 50 is provided by re-configuring a pre-existing trim piece.

The hook 50 is most economically provided in the vicinity of the join between the rear side window trim 20 and the trunk side trim 30 because, in this way, the rear side window trim 20 and the trunk side trim 30 do not have to be increased in size. The hook 50 can be fabricated from those parts of rear side window trim 20 and trunk side trim 30 that would necessarily overlap.

The formation of the backing plate 70 from a part of the rear side window trim 20 is advantageous because this trim is typically provided in a lighter colour than the trunk side trim 30 and therefore the user's attention is subtlely drawn to the presence of the hook 50.

The retaining member 60 of the hook 50 includes a neck portion 61 and a head portion 62. In use, the handles of a bag are passed over the head portion 62 and allowed to come to rest on the neck portion 61. The head portion 62 is elongate and includes a central portion 63 and two end portions 64, 65. The end portions 64, 65 ensure that the handles of a bag cannot accidentally pass from the neck portion 61, over the head portion 62 and thus escape from the hook 50.

The head portion 62 is elongate to minimise the overall extent of the hook 50 in the vertical direction.

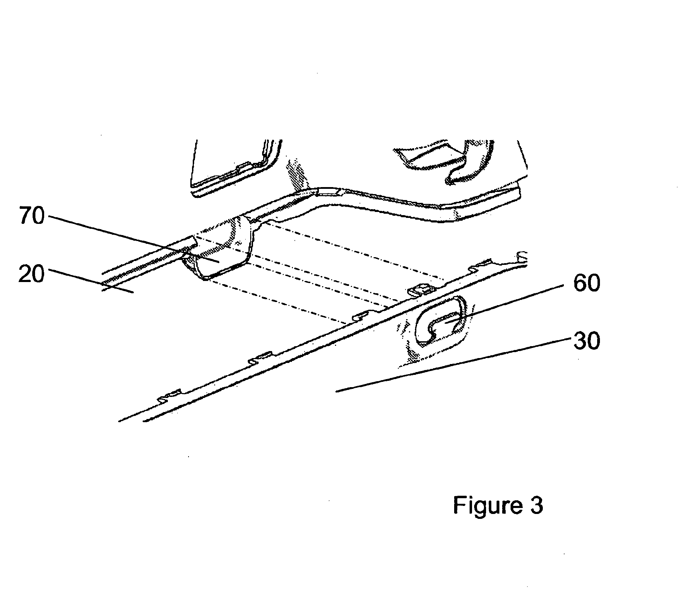

Figure 3 shows an exploded view of the hook 50 shown in Figure 2. Figure 3 shows the retaining member 60 formed as a cut-out from the trunk side trim 30. The backing plate 70 is formed from the lower most part of the rear side window trim 20. When the rear side window trim 20 and the trunk side trim 30 are brought together in the vehicle 10, the backing plate 70 provides a closure behind the cut-out that forms the retaining member 60. In this way, the sound pathway that would otherwise be opened by providing the retaining member 60 is closed by the provision of the backing plate 70.

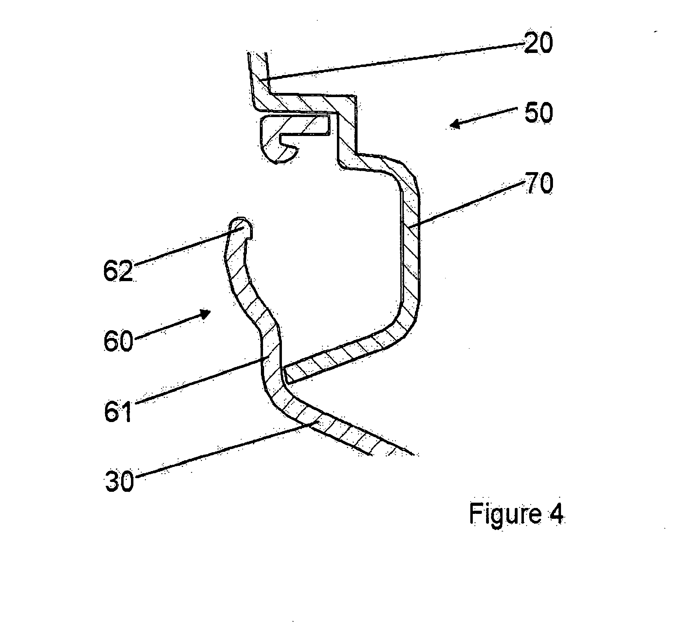

Figure 4 shows a section along the line A-A of the hook shown in Figure 2. Figure 4 shows that the head portion 62 of the retaining member 60 is offset relative to the neck portion 61. This configuration further ensures that the handles of a bag cannot accidentally pass from the neck portion 61 over the head portion 62 as a result of the normal motion of the vehicle 10.

It will be appreciated by one skilled in the art that the hook 50 of the present invention is not limited to being located in the trunk side trim 30 of a vehicle10. The hook 50 may advantageously be located on the side or rear of a vehicle seat, on a pillar trim, on a centre console or any other location that may be convenient to the user of a vehicle. In each of these examples the desired location will be covered with at least two pieces of vehicle trim. To form the hook of the present invention the two trim pieces would be overlapping, with the first trim piece incorporating the retaining member and the second trim piece incorporating the backing member.

Additionally, in a further example of the hook 50 of the present invention, the volume defined by the trunk side trim 30 and the backing plate 70, may be illuminated by suitable means. This would aid the user in locating the hook 50 in low ambient light conditions such as at night time.

## Claims

1. An apparatus for a vehicle (10), the apparatus comprising:
a retaining member (60) configured to hold an object, in use;
a backing plate (70) mounted behind the retaining member (60); wherein
the retaining member (60) comprises an integral part of a first piece of vehicle trim (30) and the backing plate (70) comprises an integral part of a second piece of vehicle trim (20);
**characterised in that**: the backing plate (70) extends beyond the boundary where the two parts of trim join together, so as to provide a closure behind the retaining member (60).

2. An apparatus according to claim 1, wherein the first piece of vehicle trim (30) overlaps the second piece of vehicle trim.

3. An apparatus according to claim 1 or claim 2, wherein the retaining member (60) is elongate.

4. An apparatus according to any of the preceding claims, wherein the retaining member (60) comprises a neck portion (61) and a head portion (62).

5. An apparatus according to claim 4, wherein the head portion is offset relative to the neck portion.

6. An apparatus according to any one of the preceding claims, wherein the retaining member (60) is formed defined, at least in part, by a cut-out from the first piece of vehicle trim.

7. An apparatus according to claim 6, wherein the backing plate (70) is configured to prevent the ingress of sound through the cut-out in the first piece of vehicle trim (30).

8. An apparatus according to any of the preceding claims, wherein the first piece of vehicle trim (30) is a different colour from the second piece of vehicle trim (20).

9. A vehicle having an apparatus as claimed in any preceding claim.

10. A vehicle comprising:
a first piece of vehicle trim (30) incorporating a retaining member(60); and
a second piece of trim (20) incorporating a backing plate (70) that lies behind the retaining member;
wherein the backing plate (70) extends beyond the boundary where the two parts of trim join together, so as to provide a closure behind the retaining member (60), and
wherein the retaining member (60) and the backing plate provide a hook.

11. A vehicle according to claim 10, wherein
the first piece of vehicle trim comprises a trunk side trim, and
the second piece of vehicle trim comprises a rear side window trim.

12. A vehicle according to claim 10, wherein
the first piece of vehicle trim comprises a lower pillar trim, and
the second piece of vehicle trim comprises an upper pillar trim.

## Patentansprüche

1. Vorrichtung für ein Fahrzeug (10), wobei die Vorrichtung Folgendes umfasst:
ein Rückhalteelement (60), das dazu ausgebildet ist, in Gebrauch einen Gegenstand zu halten;
eine Verstärkungsplatte (70), die hinter dem Rückhalteelement (60) angebracht ist; wobei
das Rückhalteelement (60) einen integrierten Teil eines ersten Fahrzeug-Innenverkleidungsstücks (30) umfasst und die Verstärkungsplatte (70) einen integrierten Teil eines zweiten Fahrzeug-Innenverkleidungsstücks (20) umfasst;
**dadurch gekennzeichnet, dass**
sich die Verstärkungsplatte (70) über die Grenze hinaus erstreckt, an der die zwei Innenverkleidungsteile zusammengefügt sind, um einen Verschluss hinter dem Rückhalteelement (60) vorzusehen.

2. Vorrichtung nach Anspruch 1, wobei der erste Fahrzeug-Innenverkleidungsstück (30) den zweiten Fahrzeug-Innenverkleidungsstück überlappt.

3. Vorrichtung nach Anspruch 1 oder Anspruch 2, wobei das Rückhalteelement (60) langgestreckt ist.

4. Vorrichtung nach einem der vorangehenden Ansprüche, wobei das Rückhalteelement (60) einen Halsabschnitt (61) und einen Kopfabschnitt (62) umfasst.

5. Vorrichtung nach Anspruch 4, wobei der Kopfabschnitt gegenüber dem Halsabschnitt versetzt ist.

6. Vorrichtung nach einem der vorangehenden Ansprüche, wobei das Rückhalteelement (60) mindestens teilweise durch einen Ausschnitt aus dem ersten Fahrzeug-Innenverkleidungsstück definiert ist.

7. Vorrichtung nach Anspruch 6, wobei die Verstärkungsplatte (70) dazu ausgebildet ist, das Eindringen von Schall durch den Ausschnitt in dem ersten Fahrzeug-Innenverkleidungsstück (30) zu verhindern.

8. Vorrichtung nach einem der vorangehenden Ansprüche, wobei das erste Fahrzeug-Innenverkleidungsstück (30) eine andere Farbe hat als das zweite Fahrzeug-Innenverkleidungsstück (20).

9. Fahrzeug mit einer Vorrichtung nach einem der vorangehenden Ansprüche.

10. Fahrzeug, das Folgendes umfasst:
ein erstes Fahrzeug-Innenverkleidungsstück (30), in das ein Rückhalteelement (60) integriert ist; und
ein zweites Fahrzeug-Innenverkleidungsstück (20), in das eine hinter dem Rückhalteelement liegende Verstärkungsplatte (70) integriert ist;
wobei sich die Verstärkungsplatte (70) über die Grenze hinaus erstreckt, an der die zwei Innenverkleidungsteile zusammengefügt sind, um einen Verschluss hinter dem Rückhalteelement (60) vorzusehen, und
wobei das Rückhalteelement (60) und die Verstärkungsplatte einen Haken vorsehen.

11. Fahrzeug nach Anspruch 10, wobei
das erste Fahrzeug-Innenverkleidungsstück eine Kofferraum-Seitenverkleidung umfasst, und
das zweite Fahrzeug-Innenverkleidungsstück eine Einfassung eines hinteren Seitenfensters umfasst.

12. Fahrzeug nach Anspruch 10, wobei
das erste Fahrzeug-Innenverkleidungsstück eine unter Verkleidung eines Pfostens umfasst; und
das zweite Fahrzeug-Innenverkleidungsstück eine obere Verkleidung eines Pfostens umfasst.

## Revendications

1. Appareil pour véhicule (10), l'appareil comprenant :
un élément de retenue (60) configuré pour retenir un objet, durant son utilisation ;
une plaque de support (70) montée derrière l'élément de retenue (60) ; dans lequel
l'élément de retenue (60) fait partie intégrante d'un premier morceau de garniture de véhicule (30) et la plaque de support (70) fait partie intégrante d'un second morceau de garniture de véhicule (20) ;
**caractérisé en ce que**,
la plaque de support (70) s'étend au-delà de la frontière où se joignent les deux morceaux de garniture, de façon à assurer une fermeture derrière l'élément de retenue (60).

2. Appareil selon la revendication 1, dans lequel le premier morceau de garniture de véhicule (30) chevauche le second morceau de garniture de véhicule.

3. Appareil selon la revendication 1 ou la revendication 2, dans lequel l'élément de retenue (60) est allongé.

4. Appareil selon l'une quelconque des revendications précédentes, dans lequel l'élément de retenue (60) comprend une partie de col (61) et une partie de tête (62).

5. Appareil selon la revendication 4, dans lequel la partie de tête est décalée par rapport à la partie de col.

6. Appareil selon l'une quelconque des revendications précédentes, dans lequel l'élément de retenue (60) est formé défini, au moins en partie, par une découpe dans le premier morceau de garniture de véhicule.

7. Appareil selon la revendication 6, dans lequel la plaque de support (70) est configurée pour empêcher l'entrée de son à travers la découpe dans le premier morceau de garniture de véhicule (30).

8. Appareil selon l'une quelconque des revendications précédentes, dans lequel le premier morceau de garniture de véhicule (30) est d'une couleur différente de celle du second morceau de garniture de véhicule (20).

9. Véhicule doté d'un appareil selon l'une quelconque des revendications précédentes.

10. Véhicule comprenant :
un premier morceau de garniture de véhicule (30) incorporant un élément de retenue (60) ; et
un second morceau de garniture (20) incorporant une plaque de support (70) qui repose derrière l'élément de retenue ;
dans lequel la plaque de support (70) s'étend au-delà de la frontière où se joignent les deux morceaux de garniture, de façon à assurer une fermeture derrière l'élément de retenue (60), et
dans lequel l'élément de retenue (60) et la plaque de support forment un crochet.

11. Véhicule selon la revendication 10, dans lequel
le premier morceau de garniture de véhicule consiste en une garniture latérale de coffre, et
le second morceau de garniture de véhicule consiste en une garniture de vitre latérale arrière.

12. Véhicule selon la revendication 10, dans lequel
le premier morceau de garniture de véhicule consiste en une garniture de montant inférieure, et
le second morceau de garniture de véhicule consiste en une garniture de montant supérieure.
